# FASCICULE DE BREVET EUROPEEN

(11) **EP 0 459 840 B1**
(45) Date de publication et mention de la délivrance du brevet: **08.03.1995**
(21) Numéro de dépôt: 91400946.9
(22) Date de dépôt: 09.04.1991
(51) Int. Cl.: F15B 20/00, F15B 21/08, B62D 7/14

(54) **Dispositif de commande d'un vérin hydraulique à double effet**
Steuereinrichtung für einen doppelt wirkenden Arbeitszylinder
Control device for a double acting hydraulic actuator

(30) Priorité: 31.05.1990 FR 9006773
(43) Date de publication de la demande: 04.12.1991
(73) Titulaire: ALLIEDSIGNAL EUROPE SERVICES TECHNIQUES, 93700 Drancy (FR)
(72) Inventeur: Kervagoret, Gilbert, BENDIX EUROPE SERVICES TECH., F-93700 Drancy (FR)
(74) Mandataire: Bentz, Jean-Paul

(56) Documents cités:
- EP-A- 0 334 723
- DE-A- 3 811 312
- PATENT ABSTRACTS OF JAPAN vol. 11, no. 269 (M-621)(2716) 02 septembre 1987,& JP-A-62 71758

## Description

La présente invention est relative à un dispositif de commande d'un vérin hydraulique à double effet comprenant, dans un circuit principal, un ensemble distributeur commandé par des moyens de commande électrique, et commandant la mise en relation de chacune des deux chambres du vérin sélectivement à une source de fluide sous haute pression ou à un réservoir de fluide à basse pression, et un circuit auxiliaire commandé par des moyens sensibles à la position du piston du vérin et comprenant des moyens de distribution pour assurer le retour du piston du vérin dans sa position de repos en cas de défaillance des moyens de commande électrique, l'ensemble distributeur comportant, pour chaque chambre du vérin, un clapet à commande hydraulique pour mettre la chambre correspondante en communication avec le réservoir quand l'autre chambre est reliée à la source de fluide sous haute pression .

Dans de nombreuses applications, il est souhaitable que, en cas de défaillance, le piston du vérin revienne automatiquement en position de repos, par exemple en position médiane dans le cas d'un vérin à double effet. On connaît par EP-A-0 334 723 un dispositif de commande de vérin hydraulique à double effet du type de celui défini ci-dessus et dans lequel, selon un mode de réalisation, une défaillance dans le circuit hydraulique sous haute pression entraine le blocage du piston du vérin dans la position qu'il occupait avant la défaillance, une disposition n'étant prévue en cas de défaillance du circuit de commande électrique que selon un autre mode de réalisation. Ce dernier mode de réalisation exige le montage d'un dispositif de détection de la position du piston du vérin, et donc de munir le vérin de deux bouchons de forme complexe aux travers desquels passe la tige de sortie du vérin et équipés de distributeurs. Les tiroirs de ces distributeurs doivent être usinés avec une très grande précision, typiquement de l'ordre du micron, et de plus doivent être appairés très précisément pour assurer la parfaite symétrie du dispositif. En effet, en cas de défaillance, chaque distributeur doit être capable d'assurer l'arrivée de fluide sous pression dans une des chambres du vérin tandis que l'autre distributeur doit permettre l'évacuation d'exactement le même volume du fluide contenu dans l'autre chambre vers un réservoir à basse pression, pour que le mouvement de retour du piston du vérin soit assuré en toute sécurité.

L'invention a donc pour objet un dispositif de commande d'un vérin hydraulique à double effet dans lequel le retour du piston en position de repos soit assuré de façon automatique en cas de défaillance des moyens de commande électriques sans modifications du vérin lui-même, de façon simple et fiable, et sans nécessiter d'usinage coûteux.

A cette fin, le dispositif de l'invention est essentiellement caractérisé en ce que les moyens de distribution sont essentiellement constitués par un distributeur à tiroir mettant sélectivement en communication une chambre du vérin avec la source de fluide sous haute pression jusqu'au retour du piston du vérin dans sa position de repos, et pilotant simultanément le clapet à commande hydraulique correspondant à l'autre chambre .

D'autres caractéristiques et avantages de la présente invention ressortiront de la description suivante d'un mode de réalisation donné à titre d'exemple, faite en relation avec les dessins annexés sur lesquels :
- la Figure 1 représente un schéma théorique d'un mode de réalisation de l'invention,
- la Figure 2 représente un schéma théorique d'une variante du mode de réalisation de la Figure 1,

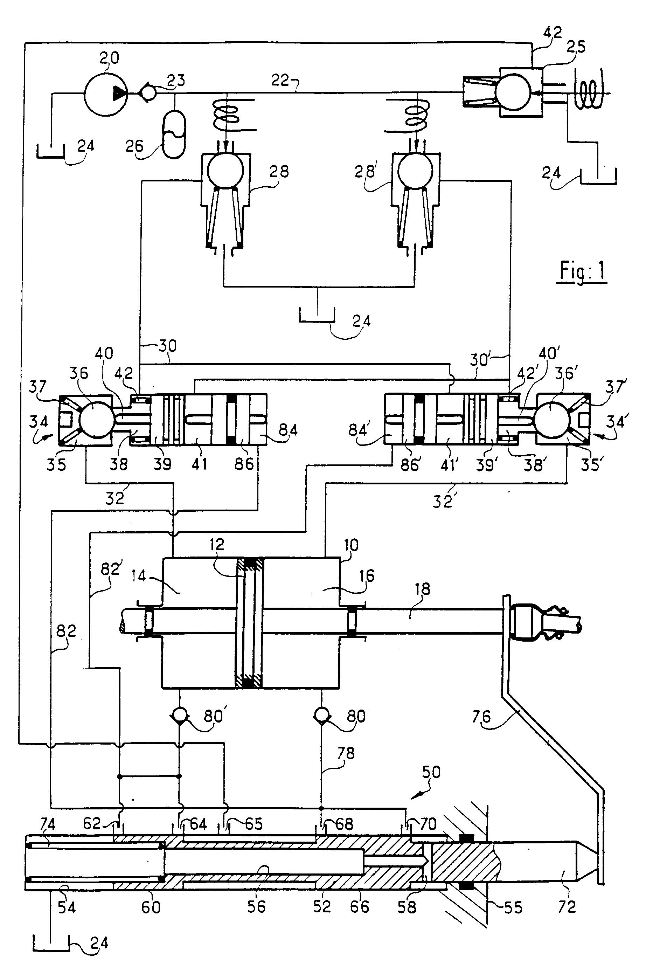

On a représenté sur la Figure 1 un vérin à double effet 10 divisé par un piston 12 en deux chambres 14 et 16, de volume variable. Le piston est monté sur une tige 18. L'alimentation hydraulique est assurée par une pompe 20, reliée à une conduite d'alimentation 22 à travers un clapet anti-retour 23. La conduite d'alimentation 22 est également reliée à un accumulateur de pression 26.

Le circuit de commande principal comprend, pour la chambre 14, une électrovanne à trois voies 28, qui met en communication une conduite 30, soit avec la conduite haute pression 22, soit avec un réservoir 24. Lorsque l'électrovanne 28 n'est pas excitée, elle met la conduite 30 en communication avec le réservoir 24. Le circuit de commande principal comprend de même, pour la chambre 16, une électrovanne à trois voies 28' qui met en communication une conduite 30', soit avec la conduite haute pression 22, soit avec le réservoir 24. Lorsque l'électrovanne 28′ n'est pas excitée, elle met la conduite 30′ en communication avec le réservoir 24.

Le circuit de commande principal peut être commandé par un calculateur ou un microprocesseur (non représenté) qui commande chacune des électrovalves 28,28′, la pompe 20, ainsi qu'une électrovanne de sécurité à trois voies 25 placée entre la conduite haute pression 22 et le réservoir basse pression 24. En temps normal, l'électrovanne 25 est excitée et interrompt la communication entre la conduite haute pression 22 et le réservoir 24. Le rôle de cette électrovanne 25 sera explicité par la suite.

La conduite 30 est reliée à la conduite 32 d'alimentation de la chambre 14 par l'intermédiaire d'un clapet commandé à double effet 34. Ce clapet 34 comporte une première chambre 35, dans laquelle débouche la conduite 32, contenant une bille 36 chargée par un ressort 37 vers une position de repos où elle interdit la communication avec une deuxième chambre 38 dans laquelle débouche la conduite 30. La deuxième chambre 38 est délimitée par un piston 39 portant d'un côté un pointeau 40 susceptible de soulever la bille 36 de son siège lorsque la pression dans une troisième chambre 41 de l'autre côté du piston 39 fait mouvoir ce dernier à l'encontre d'un ressort de rappel 42 situé dans la deuxième chambre 38. On voit ainsi que le clapet 34 est commandé par la pression existant dans la conduite 30′ symétrique de la conduite 30 dans le circuit correspondant à la seconde chambre 16 du vérin. Ce dernier circuit comporte un clapet à double effet 34′ identique au clapet 34, ses éléments portant les mêmes références numériques affectées d'un "prime" ne nécessitent donc pas de description détaillée.

Si on désire par exemple que le piston du vérin se déplace vers la droite en considérant la Figure 1, la pompe 20 est mise en oeuvre, l'électrovanne 28 est excitée, l'électrovanne 28′ est laissée au repos et l'électrovanne 25 de sécurité est excitée. La pression dans la conduite 22 est donc transmise dans la conduite 30 et dans la deuxième chambre 38. La bille 36 se soulève sous l'action de cette pression qui est alors transmise par la conduite 32 à la chambre 14 du vérin jouant alors le rôle de chambre de commande du vérin. Simultanément, la pression dans la conduite 30 est transmise à la troisième chambre 41′ du clapet 34′, ce qui a pour effet de faire se mouvoir le piston 39′ vers la droite en considérant la Figure et donc de soulever la bille 36′ de son siège, établissant ainsi la communication entre les première et seconde chambres 35′ et 38′, et donc entre les conduites 32′ et 30′. L'électrovanne 28′ n'étant pas excitée, la conduite 30′ communique avec le réservoir 24, et par voie de conséquence la chambre 16 du vérin est en position de chambre commandée et se trouve donc reliée au réservoir. Le piston 12 peut donc se déplacer vers la droite. Le fonctionnement du circuit principal de commande qui vient d'être décrit pour le mouvement du piston du vérin dans un sens est identique, mutatis mutandis, pour le mouvement du piston du vérin dans l'autre sens et ne sera donc pas décrit en détail.

Ainsi, les chambres 14 et 16 sont alternativement l'une sous pression, l'autre au réservoir. Si cependant les deux électrovannes 28,28′ sont au repos, les deux chambres 14 et 16 sont maintenues isolées par la fermeture des clapets 34,34′.

On notera au passage que cette disposition avantageuse des clapets commandés 34 et 34′ permet de se dispenser de disposer des clapets anti-retour dans les conduites 30 et 30′.

Au cas où, pendant une manoeuvre du vérin, la pression chuterait dans la conduite haute pression 22, cela entraînerait la fermeture du clapet 34 ou 34′ qui serait ouvert et, par conséquent, l'isolement automatique des chambres 14 et 16, et donc l'immobilisation du piston 12 dans la position qu'il occupait au moment où l'avarie dans le circuit hydraulique est apparue.

Au cas où, soit pendant une manoeuvre du vérin, soit lorsque le circuit de commande principal est déjà en défaillance hydraulique, survient une défaillance dans le dispositif de commande électrique des électrovannes, le circuit auxiliaire entre en action, comme on va maintenant le décrire, pour ramener automatiquement le piston du vérin dans sa position de repos.

Une panne du circuit de commande électrique se traduit, dans l'hypothèse la plus pessimiste, par un arrêt du fonctionnement de la pompe 20, et les électrovannes 28,28′ et 25 ne sont plus excitées. L'électrovanne 25 se trouve donc en position de repos et ouvre la communication entre la conduite haute pression 22 et une conduite 42 qui, lorsque l'électrovanne 25 était excitée, communiquait avec le réservoir 24. Ce faisant, l'électrovanne 25 interrompt la communication entre le réservoir 24 et la conduite 42. La conduite 42 relie alors l'accumulateur de pression 26 avec un distributeur 50 constitué d'un tiroir 52 coulissant dans un alésage 54 formé dans un corps 55. Le tiroir 52 est lui même percé d'un alésage axial 56 débouchant dans un alésage radial 58. Le tiroir 52 présente une portée 60 coopérant avec des orifices 62 et 64 et une portée 66 coopérant avec des orifices 68 et 70.
Un orifice 65 est de plus prévu entre les portées 60 et 66 de façon à n'être jamais recouvert par une d'entre elles.

Le tiroir 52 possède une tige de commande 72 faisant saillie à l'extérieur du corps 55 de façon étanche, et est soumis à l'action d'un ressort de rappel 74 tendant à faire sortir la tige de commande 72 hors du corps 55 de façon à ce qu'elle porte sur un organe 76 solidaire de la tige 18 du piston 12. On comprend donc que les mouvements du tiroir 52 sont identiques à ceux de la tige 18, et par conséquent à ceux du piston 12.

Si au moment ou est survenue la panne du circuit de commande électrique, le vérin était déplacé vers la droite (en considérant la Figure 1), le tiroir 52 est donc lui aussi déplacé vers la droite sous l'action du ressort 74. Dans cette position, l'orifice 68 est découvert par la portée 66 tandis que l'orifice 70 est recouvert par cette portée. De même la portée 60 découvre l'orifice 62 et recouvre l'orifice 64.

On a vu plus haut qu'une défaillance du circuit de commande électrique a pour conséquence la mise en relation de l'accumulateur 26, sous pression, avec la conduite 42. Cette conduite est reliée à l'orifice 65, toujours découvert, et le fluide sous pression peut alors être transmis, par l'intermédiaire de l'orifice 68 découvert et d'une conduite 78 sur laquelle est disposé un clapet anti-retour 80, à la chambre 16 du vérin, le clapet anti-retour 80 étant passant dans ce sens. Le fluide sous pression est également transmis, par une conduite 82 branchée sur la conduite 78, à une quatrième chambre 84 du clapet commandé 34. Cette quatrième chambre 84 est séparée de la troisième chambre 41 par un piston 86 qui, sous l'effet de l'accroissement de pression dans la chambre 84, va avancer vers la gauche en considérant la Figure 1 en poussant le piston 39 qui va lui-même soulever la bille 36 de son siège. La chambre 14 du vérin se trouve donc reliée au réservoir 24 par les conduites 32 et 30 et l'électrovanne 28 qui est en position de repos. Le piston 12 du vérin peut donc se déplacer vers la gauche en considérant la Figure 1 sous l'effet de la pression dans la chambre 16, vers sa position de repos. Dans ce mouvement, le piston entraîne, par l'organe 76 la tige de commande 72 du tiroir 52 jusqu'à ce que la portée 66 vienne obturer l'orifice 68, interrompant ainsi la fourniture de fluide sous pression à la chambre 16, le piston 12 s'arrêtant alors dans sa position de repos.

Pendant le mouvement de retour du piston 12 et du tiroir 52, l'orifice 62 est découvert par la portée 60, et communique ainsi avec le volume délimité par les alésages 54 et 56, volume lui-même en communication avec le réservoir 24. Il s'ensuit donc qu'aucune pression ne règne dans la conduite 82′ et la chambre 84′. Aucune pression ne régnant non plus dans la chambre 41′ puisque l'électrovanne 28 est fermée et la met en communication avec le réservoir 24, on est alors assuré que la bille 36′ reste collée sur son siège par le ressort 37′, et empèche ainsi toute perte de liquide de la chambre 16 du vérin vers le réservoir 24.

De même, pendant ce mouvement de retour, la chambre 84 du clapet 34 est toujours soumise par la conduite 82 communiquant avec l'orifice 68, à la même pression que celle qui est communiquée à la chambre 16. On est donc assuré que la bille 36 reste soulevée de son siège et permet l'avacuation du liquide de la chambre 14 vers le réservoir 24.

Le fonctionnement du circuit de commande auxiliaire, en cas de panne du circuit de commande électrique survenant alors que le piston du vérin se trouve à gauche est identique, mutatis mutandis, et ne sera donc pas décrit en détail.

On voit donc que, grâce à l'invention, une panne du circuit électrique se traduit automatiquement et dans tous les cas par la fourniture de fluide sous pression de l'accumulateur 26 vers la chambre du vérin appropriée par l'intermédiaire du distributeur 50, tandis que le fluide contenu dans l'autre chambre du vérin peut retourner au réservoir 24 par l'intermédiaire du circuit de commande principal, à savoir le clapet commandé 34 ou 34′ et l'électrovanne 28 ou 28′. Les circuits d'alimentation et d'évacuation du vérin en cas de défaillance électrique sont ainsi commandés par un distributeur unique dont l'usinage n'a plus besoin d'être réalisé de façon critique. L'expérience a montré que des tolérances de 20 à 30 microns, obtenues de façon courante, permettent un fonctionnement totalement satisfaisant du distributeur.

De plus, il est avantageux de pouvoir réaliser le tiroir du distributeur avec de telles tolérances, puisqu'alors des fuites internes se produisent et sont même souhaitables puisqu'elles assurent l'équilibrage axial du tiroir.

Le distributeur 50 dont le fonctionnement vient d'être décrit ne joue aucun rôle en fonctionnement normal, c'est à dire hors défaillance. En effet, l'électrovanne 25 étant excitée, la conduite 42 se trouve donc reliée au réservoir 24. L'espace entre les portées 60 et 66 est donc à la même pression que le réservoir, ainsi que l'espace délimité par les alésages 54 et 56. L'ensemble du distributeur 50 est donc soumis à une pression unique et peut donc suivre les mouvements du piston 12 et de la tige 18 sans les perturber. Ainsi en position décentrée, la chambre 84 est à la pression du réservoir 24 par la conduite 82 et l'orifice 68 ou 70, de même que la chambre 84′ par la conduite 82′ et l'orifice 62 ou 64. Les pistons 86 et 86′ des clapets 34 et 34′ sont donc inopérants en fonctionnement hors défaillance, de sorte que le circuit de commande principal fonctionne comme si le distributeur 50 n'existait pas. De même, les fuites internes mentionnées plus haut font que, en position centrée, les chambres 84 et 84′ sont aussi à la pression du réservoir 24, et le système se trouve donc parfaitement équilibré.

Un autre avantage de l'invention est de permettre une réalisation non symétrique du distributeur. En effet il suffit que le tiroir 52 puisse suivre la course du piston du vérin dans un seul sens (vers la gauche sur la Figure), alors que sa course peut très bien être limitée dans l'autre sens, la tige de commande 72 ne suivant, grâce au ressort 74, l'organe 76 que sur une partie de son trajet autorisant l'ouverture de 62 et 68, puis s'en désolidarisant sur le reste du trajet. Ceci permet une importante réduction de l'encombrement du distributeur.

Encore un autre avantage de l'invention est de pouvoir placer le distributeur 50 en un endroit quelconque par rapport au circuit de commande du vérin ou au vérin lui-même, sous la seule réserve que le tiroir soit commandé par un organe suivant les mouvements du piston du vérin.

On peut prévoir un dispositif de freinage du mouvement de retour du piston 12 pour éviter qu'il ne soit trop brusque. On peut par exemple disposer une restriction dans la conduite entre les électrovannes 28 et 28′ et le réservoir 24. Mais cette restriction freinerait aussi le mouvement du piston 12 en fonctionnement normal.

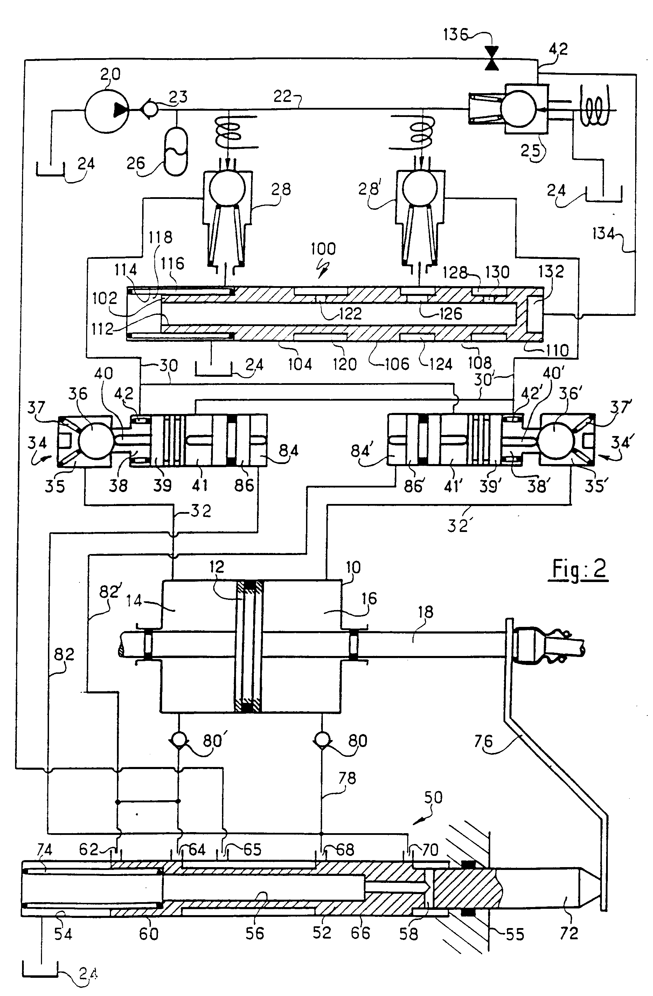

On a représenté sur la Figure 2 une variante du mode de réalisation de la Figure 1, où les mêmes éléments sont affectés des mêmes références numériques. Le fonctionnement du dispositif de la Figure 2 est identique, en mode normal ou en cas de défaillance, à celui de la Figure 1 et ne sera donc pas explicité en détail. La différence réside dans l'adjonction d'un distributeur 100 dans le circuit entre les électrovannes 28 et 28′ et le réservoir 24. Le distributeur 100 est composé d'un tiroir 102 à quatre portées 104,106,108 et 110 et formé intérieurement avec un alésage borgne 112. Le tiroir 102 coulisse dans un alésage 114 et est rappelé en position de repos par un ressort 116.

La portée 104 définit avec l'alésage 114 une chambre 118 dans laquelle se trouve le ressort 116, et qui communique avec le réservoir 24 et l'intérieur de l'alésage 112. Les portées 104 et 106 définissent entre elles une chambre annulaire 120 communiquant avec l'intérieur de l'alésage borgne 112 par un perçage 122 faisant office de restriction. Les portées 106 et 108 définissent entre elles une chambre annulaire 124 en communication, par une ouverture 126, avec l'intérieur de l'alésage borgne 112. Les portées 108 et 110 définissent entre elles une chambre annulaire 128 communiquant avec l'intérieur de l'alésage borgne 112 par un perçage 130 faisant office de restriction. La portée 110 définit avec l'alésage 114 une chambre 132 reliée par une conduite 134 à la conduite 42. Dans la position de repos représentée, la sortie de l'électrovanne 28 vers le réservoir 24 débouche dans la chambre 118, et la sortie de l'électrovanne 28′ vers le réservoir 24 débouche dans la chambre 124.

En fonctionnement normal, c'est à dire quand l'électrovanne 25 est excitée, on a vu que la conduite 42 est reliée au réservoir 24. Il en est donc ainsi de la conduite 134 et de la chambre 132. L'électrovanne 28 ou 28′ qui n'est pas excitée met donc la chambre commandée 14 ou 16 respectivement en communication avec le réservoir 24 par l'intermédiaire de la chambre 118, ou la chambre 124 l'ouverture 126 et l'alésage 112 respectivement. Tout se passe donc bien comme si le distributeur 100 n'était pas là.

Par contre, lors d'une défaillance électrique, l'électrovanne 25 revient en position de repos et permet à l'accumulateur 26 de se décharger dans la conduite 42. Il y a donc simultanément augmentation de pression dans la conduite 134 et dans la chambre 132. La chambre 118 étant constamment reliée au réservoir 24, le tiroir 102 est donc soumis à une différence de pression et se déplace vers la gauche (sur la Figure 2) de façon telle que la conduite venant de l'électrovanne 28 débouche dans la chambre 120 et la conduite venant de l'électrovanne 28′ débouche dans la chambre 128. Ces deux chambres 120 et 128 comportent chacune une restriction 122 et 130 respectivement menant vers l'intérieur de l'alésage 112 et le réservoir 24. Le circuit par lequel se décharge le fluide d'une des chambres 14 ou 16 du vérin présente donc, lors du fonctionnement en défaillance électrique, une restriction 122 ou 130 ralentissant l'écoulement de fluide vers le réservoir, et donc aussi le mouvement de retour du piston 12 vers sa position de repos.

Le freinage du mouvement de retour du piston 12 peut encore être amélioré en disposant une restriction fixe 136 sur la conduite 42 en aval du raccordement avec la conduite 134. Une telle restriction 136 joue le double rôle de ralentir la fourniture de fluide sous pression au distributeur 50 et à une des chambres 14 ou 16 du vérin, et d'assurer un déplacement rapide du tiroir 102 puisque la chambre 132 reçoit alors instantanément la totalité de l'élévation de pression dûe à la décharge de l'accumulateur 26.

On a donc bien réalisé conformément à l'invention un dispositif de commande d'un vérin hydraulique à double effet dans lequel le retour du piston en position de repos est assuré automatiquement en cas de défaillance des moyens de commande électrique de façon particulièrement simple, fiable et peu onéreuse.

Bien que décrite en relation avec deux modes de réalisation, l'invention est susceptible de recevoir de nombreuses modifications qui apparaîtront à l'homme de l'art. Par exemple, le tiroir du distributeur 50 peut suivre les mouvements du piston 12 du vérin par l'intermédiaire d'une démultiplication de façon à réduire encore l'encombrement du distributeur 50.

## Revendications

1. Dispositif de commande d'un vérin (10) hydraulique à double effet comprenant, dans un circuit principal, un ensemble distributeur commandé par des moyens de commande électrique, et commandant la mise en relation de chacune des deux chambres du vérin (14, 16) sélectivement à une source de fluide sous haute pression (20, 26) ou à un réservoir de fluide à basse pression (24), et un circuit auxiliaire commandé par des moyens (76) sensibles à la position du piston (12) du vérin et comprenant des moyens de distribution pour assurer le retour du piston (12) du vérin (10) dans sa position de repos en cas de défaillance des moyens de commande électrique, l'ensemble distributeur comportant, pour chaque chambre du vérin, un clapet à commande hydraulique (34, 34') pour mettre la chambre correspondante (14, 16) en communication avec le réservoir quand l'autre chambre est reliée à la source de fluide sous haute pression, caractérisé en ce que les moyens de distribution sont essentiellement constitués par un distributeur à tiroir (50) mettant sélectivement en communication une chambre (14, 16) du vérin (10) avec la source de fluide sous haute pression jusqu'au retour du piston (12) du vérin (10) dans sa position de repos, et pilotant simultanément le clapet à commande hydraulique correspondant à l'autre chambre.

2. Dispositif selon la revendication 1, caractérisé en ce que le tiroir (52) du distributeur (50) est commandé par la position du piston (12) du vérin (10).

3. Dispositif selon la revendication 2, caractérisé en ce qu'il comprend, pour chaque chambre (14, 16) du vérin (10), une électrovanne à trois voies (28, 28') qui, dans une première position relie une conduite d'alimentation (30, 30') à la source de fluide sous haute pression (20, 26) et dans une seconde position, relie la conduite d'alimentation (30, 30') au réservoir de fluide (24).

4. Dispositif selon l'une quelconque des revendications précédentes, caractérisé en ce que des moyens (100, 136) sont prévus pour ralentir le retour du piston (12) du vérin (10) à sa position de repos.

5. Dispositif selon la revendication 4, caractérisé en ce que les moyens de ralentissement comprennent une restriction (136) située entre la source de fluide sous haute pression (26) et le distributeur à tiroir (50).

6. Dispositif selon la revendication 4, caractérisé en ce que les moyens de ralentissement comprennent une restriction (122, 130) située entre une chambre (14, 16) du vérin (10) et le réservoir (24).

7. Dispositif selon la revendication 6, caractérisé en ce que le restriction (122, 130) n'est située entre une chambre (14, 16) du vérin et le réservoir (24) qu'en cas de défaillance des moyens de commande électrique.

## Claims

1. Device for the control of a double-acting hydraulic jack (10), comprising, in a main circuit, a distributor assembly controlled by electrical control means and commanding the putting of each of the two chambers (14, 16) of the jack selectively in relation with a source of fluid under high pressure (20, 26) or with a reservoir of fluid at low pressure (24), and an auxiliary circuit controlled by means (76) sensitive to the position of the piston (12) of the jack and comprising distribution means for ensuring that the piston (12) of the jack (10) returns to its rest position in the event of failure of the electrical control means, the distributor assembly including, for each chamber of the jack, a hydraulically controlled valve (34, 34') for putting the corresponding chamber (14, 16) in communication with the reservoir when the other chamber is connected to the source of fluid under high pressure, characterized in that the distribution means are essentially made up of a slide distributor (50) selectively putting one chamber (14, 16) of the jack (10) in communication with the source of fluid under high pressure until the piston (12) of the jack (10) returns to its rest position, and simultaneously governing the hydraulically controlled valve corresponding to the other chamber.

2. Device according to Claim 1, characterized in that the slide (52) of the distributor (50) is controlled by the position of the piston (12) of the jack (10).

3. Device according to Claim 2, characterized in that it comprises, for each chamber (14, 16) of the jack (10), a three-way solenoid valve (28, 28') which, in a first position, connects a feed pipe (30, 30') to the source of fluid under high pressure (20, 26) and, in a second position, connects the feed pipe (30, 30') to the fluid reservoir (24).

4. Device according to any of the preceding claims, characterized in that means (100, 136) are provided for slowing the return of the piston (12) of the jack (10) into its rest position.

5. Device according to Claim 4, characterized in that the slowing means comprise a restriction (136) located between the source of fluid under high pressure (26) and the slide distributor (50).

6. Device according to Claim 4, characterized in that the slowing means comprise a restriction (122, 130) located between a chamber (14, 16) of the jack (10) and the reservoir (24).

7. Device according to Claim 6, characterized in that the restriction (122, 130) is located between a chamber (14, 16) of the jack and the reservoir (24) only in the event of a failure of the electrical control means.

## Patentansprüche

1. Steuervorrichtung für einen doppelt wirkenden Arbeitzylinder (10), die in einem Hauptkreis eine Verteilereinheit enthält, die von elektrischen Steuermitteln gesteuert ist und das selektive Verbinden jeder der beiden Zylinderkammern (14, 16) mit einer Hochdruckfluidquelle (20, 26) oder einem Niederdruckfluidreservoir (24) steuert, und einen Hilfskreis enthält, der durch auf die Lage des Kolbens (12) des Zylinders ansprechende Mittel (76) gesteuert ist und Verteilungsmittel enthält, um die Rückkehr des Kolbens (12) des Zylinders (10) in seine Ruhelage im Fall eines Ausfalls der elektrischen Steuermittel sicherzustellen, wobei die Verteilereinheit für jede Kammer des Zylinders ein hydraulisch betätigtes Sperrventil (34, 34') enthält, um die entsprechende Kammer (14, 16) mit dem Reservoir zu verbinden, wenn die andere Kammer mit der Hochdruckfluidquelle verbunden ist, dadurch gekennzeichnet, daß die Verteilungsmittel im wesentlichen durch einen Schieberverteiler (50) gebildet sind, der selektiv eine Kammer (14, 16) des Zylinders (10) mit der Hochdruckfluidquelle bis zur Rückkehr des Kolbens (12) des Zylinders (10) in seine Ruhelage verbindet und gleichzeitig das der anderen Kammer entsprechende hydraulisch betätigte Sperrventil steuert.

2. Vorrichtung nach Anspruch 1, dadurch gekennzeichnet, daß der Schieber (52) des Verteilers (50) durch die Lage des Kolbens (12) des Zylinders (10) gesteuert ist.

3. Vorrichtung nach Anspruch 2, dadurch gekennzeichnet, daß sie für jede Kammer (14, 16) des Zylinders (10) ein Dreiwegeelektroventil (28, 28') enthält, das in einer ersten Lage eine Versorgungsleitung (30, 30') mit der Hochdruckfluidquelle (20, 26) und in einer zweiten Lage die Versorgungsleitung (30, 30') mit dem Fluidreservoir (24) verbindet.

4. Vorrichtung nach einem der vorhergehenden Ansprüche, dadurch gekennzeichnet, daß Mittel (100, 136) vorgesehen sind, um die Rückkehr des Kolbens (12) des Zylinders (10) in seine Ruhelage zu verlangsamen.

5. Vorrichtung nach Anspruch 4, dadurch gekennzeichnet, daß die Mittel zur Verlangsamung eine Einengung (136) enthalten, die zwischen der Hochdruckfluidquelle (26) und dem Schieberverteiler (50) angeordnet ist.

6. Vorrichtung nach Anspruch 4, dadurch gekennzeichnet, daß die Mittel zur Verlangsamung eine Einengung (122, 130) enthalten, die zwischen einer Kammer (14, 16) des Zylinders (10) und dem Reservoir (24) angeordnet ist.

7. Vorrichtung nach Anspruch 6, dadurch gekennzeichnet, daß die Einengung (122, 130) nur im Fall eines Ausfalls der elektrischen Steuermittel zwischen einer Kammer (14, 16) des Zylinders und dem Reservoir (24) angeordnet ist.
